(19) Europäisches Patentamt
European Patent Office
Office européen des brevets

(11) EP 2 474 940 B1

(12) EUROPÄISCHE PATENTSCHRIFT

(45) Veröffentlichungstag und Bekanntmachung des Hinweises auf die Patenterteilung:
10.09.2014 Patentblatt 2014/37

(51) Int Cl.:
*G06K 19/07* (2006.01)      *G06K 19/077* (2006.01)
*H04B 5/00* (2006.01)      *H04B 1/62* (2006.01)
*H04B 7/00* (2006.01)

(21) Anmeldenummer: **12002414.6**

(22) Anmeldetag: **23.10.2009**

(54) **Transpondereinheit**

Transponder unit

unité transpondeur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.10.2008 DE 102008053097**

(43) Veröffentlichungstag der Anmeldung:
**11.07.2012 Patentblatt 2012/28**

(62) Dokumentnummer(n) der früheren Anmeldung(en) nach Art. 76 EPÜ:
**09743864.2 / 2 340 512**

(73) Patentinhaber: **Giesecke & Devrient GmbH 81677 München (DE)**

(72) Erfinder:
• **Finkenzeller, Klaus 85774 Unterföhring (DE)**
• **Schmidtke, Rainer 82008 Unterhaching (DE)**

(56) Entgegenhaltungen:
**EP-A1- 1 801 738**      **DE-A1- 10 353 500**
**DE-A1-102004 031 092**

**Beschreibung**

Die vorliegende Erfindung betrifft eine Transpondereinheit zum Übertragen von Daten zu einem Lesegerät mittels eines elektromagnetischen Feldes, ein System umfassend das Lesegerät und die Transpondereinheit sowie ein Verfahren zum Übertragen von Daten von der Transpondereinheit zu dem Lesegerät.

Transpondereinheiten werden zur drahtlosen Datenkommunikation insbesondere im Nahbereich eingesetzt. Bekannte Verfahren zur Datenübertragung im Nahbereich sind beispielsweise Bluetooth, WLAN, DECT, Zig-Bee, RFID oder NFC.

Bei RFID (Radio Frequency Identification) handelt es sich um ein Datenübertragungsverfahren mittels elektromagnetischer Felder im einem Frequenzbereich von z.B.13.56 MHz oder 868 MHz. Das RFID-Übertragungsverfahren bietet die Möglichkeit, dem Feld des Lesegerätes die zum Betrieb des Transponders benötigte Energie mittels der zugleich zur Datenübertragung verwendeten Antenne zu entnehmen. Daher ist das RFID-Übertragungsverfahren besonders für Chipkarten geeignet, bei denen die Datenübertragung kontaktlos erfolgt.

Bei NFC (Near Field Communication) handelt es sich um ein Datenübertragungsverfahren mittels elektromagnetischer Felder im Frequenzbereich 13.56 MHz. Die bei NFC eingesetzten Methoden zur Datenübertragung sind derer kontaktloser RFID-Chipkarten sehr ähnlich. NFC-Geräte können sowohl mit RFID-Chipkarten kommunizieren als auch RFID-Chipkarten simulieren.

Bei RFID und NFC kann die Datenübertragung von der Transpondereinheit (oder dem als Transponder fungierenden NFC-Gerät) zu dem Lesegerät (oder dem als Lesegerät fungierenden NFC-Gerät) insbesondere durch Lastmodulation oder mittels eines Verfahrens zur Modulation des Rückstrahlquerschnitts (elektromagnetische Backscatter-Kopplung) erfolgen.

Bei der Datenübertragung von der Transpondereinheit zu dem Lesegerät durch Lastmodulation (induktive Kopplung) wird durch Ein- und Ausschalten eines Lastwiderstandes der Wechselstrom beeinflusst, der durch ein von dem Lesegerät erzeugtes elektromagnetisches Feld in der Transponderspule induziert wird. Nach dem Prinzip der transformatorischen Kopplung bewirkt dies eine Änderung des Stromes und der Spannung an einer primären Spule des Lesegerätes, mit der das elektromagnetische Feld erzeugt wird. Hierdurch können Daten übertragen werden.

Bei der Datenübertragung von der Transpondereinheit zu dem Lesegerät durch Modulation des Rückstrahlquerschnitts wird der Rückstrahlquerschnitt, der Aufschluss darüber gibt, wie stark ein Objekt elektromagnetische Wellen reflektiert, moduliert. Beispielsweise weisen Antennen im Resonanzfall einen besonders starken Rückstrahlquerschnitt auf.

Aus der Patentanmeldung DE 10 2004 031 092 A1, ist eine Transpondereinheit bekannt, welche mit einem handelsüblichen, für den Datenempfang mittels Lastmodulation oder Modulation des Rückstrahlquerschnitts konzipierten RFID-Lesegerät oder mit einem als Lesegerät fungierenden NFC-Geräten kommunizieren kann. Diese Transpondereinheit besitzt nicht nur eine eigene Energieversorgung sondern ist auch als aktiv sendende Transpondereinheit ausgestaltet. Die aktiv sendende Transpondereinheit sendet Daten zu einem Lesegerät mittels eines selbst erzeugten Feldes, derart dass das erzeugte Signal sich für das Lesegerät nur geringfügig von einer Modulation, wie sie eine herkömmliche Transpondereinheit bzw. ein NFC Sendegerät erzeugen würde, unterscheidet. Ohne eine Last- oder Rückstreuungs-Modulation des durch das Lesegerät erzeugten Lesegerätfeldes erzeugt die Transpondereinheit somit selbst ein Feld, welches dem Lesegerät eine Modulation des Lesegerätfeldes durch eine Transpondereinheit vortäuscht. Mittels dieses Verfahrens kann die Reichweite erhöht werden. Eine Anwendung dieses Verfahrens in (kleinen) Speicherkarten, wie z.B. einer Multi-Media-Card oder einer µSD-Karte, insbesondere in Kombination mit einem Secure-Element, wird in der Patentanmeldung DE 10 2005 061 660 A1 beschrieben.

Bei herkömmlichen RFID/NFC Systemen kann über eine Antenne des Transponders das von dem Lesegerät erzeugte elektromagnetische Feld ständig empfangen werden. Die Frequenz der in der Transponderantenne induzierten HF- Wechselspannung kann somit ständig ausgewertet werden und steht dem Transponder damit als Clockfrequenz zur Taktung der Datenübertragung zwischen Transponder und Lesegerät zur Verfügung. Die Clockfrequenz entspricht dann exakt der Sendefrequenz des Lesegeräts und ist an diese phasensynchron gekoppelt. Dabei ist es gleichgültig, ob die Transpondereinheit Daten vom Lesegerät empfängt, sich in einem Nichtkommunikationsmodus befindet (z.B. Abarbeitung eines Kommandos, Warten auf ein Kommando) oder Daten z. B. per Lastmodulation oder mittels modifiziertem Rückstrahlquerschnitt an das Lesegerät sendet.

Dagegen wird bei dem durch die zuvor genannten Patentanmeldungen DE 10 2004 031 092 A1 und DE 10 2005 061660 A1 beschriebenen Verfahren, bei dem die Transpondereinheit in einem aktiven Sendebetrieb Daten zu dem Lesegerät sendet, das Clocksignal des Lesegerätes während des Sendebetriebs der Transpondereinheit durch das von der Transpondereinheit ausgesendete Signal überlagert und kann nicht mehr von der Transpondereinheit empfangen werden. Während der Übertragung von Daten benötigt eine derartige aktiv sendende Transpondereinheit daher einen eigenen Frequenzgeber (z.B. einen Quarzoszillator).

Dabei kann es zu einer Frequenzdifferenz zwischen der Clockfrequenz des Lesegeräts und der Frequenzgeberfrequenz des Frequenzgebers des aktiven Transponders kommen. Dies führt zu einem Unterschied zwischen der von dem Lesegerät erwarteten Bitrate und der tatsächlichen Bitrate der von der Transpondereinheit gesendeten Daten und kann zu Fehlern bei der Datenübertragung führen, wenn Datenbits zu einem anderen Zeitpunkt gesendet werden, als dies von dem Lesegerät erwartet wird.

Um dieses Problem zu umgehen, schlägt die DE 10 2004 031 092 A1 durch welche unabhängigen Ansprüche sind abgegrenzt sind vor, den Frequenzgeber phasenstarr mittels einer Phase-Locked-Loop-(PLL)-Schaltung mit dem von dem Lesegerät ausgesendeten Clocksignal zu synchronisieren. Eine derartige Schaltung erhöht jedoch den Herstellungsaufwand der Transpondereinheit.

Aufgabe der vorliegenden Erfindung ist es daher, eine aktiv sendende Transpondereinheit zur Verfügung zu stellen, welche mit einfachen Mitteln eine zuverlässige Datenübertragung gewährleistet.

Diese Aufgabe wird durch die Merkmale der unabhängigen Ansprüche gelöst. In davon abhängigen Ansprüchen sind vorteilhafte Ausgestaltungen und Weiterbildungen der Erfindung angegeben.

Dementsprechend umfasst die Transpondereinheit zum Übertragen von Daten zu einem Lesegerät einen Empfänger zum Empfangen eines Clocksignals, das von dem Lesegerät mit einer Clockfrequenz ausgesendet wird, einen Frequenzgeber zum Generieren einer Frequenzgeberfrequenz, welche zur Taktung der Übertragung der Daten verwendet wird, und einen Frequenzvergleicher, welcher eingerichtet ist, die Frequenzdifferenz zwischen der Clockfrequenz und der Frequenzgeberfrequenz zu bestimmen. Des Weiteren umfasst die Transpondereinheit gemäß einer ersten illustrativen Variante eine Einrichtung zum Beschränken der Datenblockgröße der an das Lesegerät zu sendenden Daten auf eine von der Frequenzdifferenz abhängige maximale Datenblockgröße.

Diese Lösung macht sich zunutze, dass für die ersten Bits eines Datenblocks eine Abweichung der von dem Lesegerät erwarteten Bitrate von der tatsächlichen Bitrate der von der Transpondereinheit gesendeten Daten nur zu einer geringen Abweichung des erwarteten Sendezeitpunkts eines Bits von dem tatsächlichen Sendezeitpunkt führt. Der Fehler einer sich geringfügig unterscheidenden Bitdauer summiert sich jedoch über den Datenblock hinweg auf und führt dazu, dass sich mit wachsender Größe des Datenblocks der Zeitunterschied zwischen dem erwarteten und dem tatsächlichen Sendezeitpunkt insbesondere für die letzten Bits des Datenblocks deutlich vergrößert. Um diesen Zeitunterschied nicht zu groß werden zu lassen, wird die Datenblockgröße beschränkt. Wenn die Datenblockgröße - abhängig von der Frequenzdifferenz - so beschränkt wird, dass selbst das letzte Bit eines Datenblocks nicht zu einem Zeitpunkt übertragen wird, an dem das Lesegerät bereits das nächstfolgende oder das vorhergehende Bit des Datenblocks erwartet, kann es nicht zu einem Lesefehler im Lesegerät kommen. Mittels einer Beschränkung der Datenblockgröße basierend auf der Frequenzdifferenz können somit Fehler der Datenübertragung vermieden oder begrenzt werden.

Vorzugsweise wird die Datenblockgröße auf die folgende, von der Frequenzdifferenz abhängige maximale Datenblockgröße beschränkt:

$$\text{Byte}_{\text{MaxBlock}} \leq [\Delta\text{Pulse}_{\max} \cdot f_c] / [\,|\Delta f_{\text{PICC}\leftrightarrow\text{PCD}}|\, \cdot \text{Bit}_{\text{Byte}} \cdot \text{Pulse}_{\text{Bit}}],$$

wobei $\text{Byte}_{\text{MaxBlock}}$ die maximale Datenblockgröße in Bytes pro Datenblock ist, $f_c$ die Frequenzgeberfrequenz ist, $\Delta f_{\text{PICC}\leftrightarrow\text{PCD}}$ die Frequenzdifferenz zwischen der Clockfrequenz und der Frequenzgeberfrequenz ist, $\text{Bit}_{\text{Byte}}$ die Anzahl an Bits pro Byte ist (z.B. 8 Datenbits + 1 Paritätsbit), $\text{Pulse}_{\text{Bit}}$ die Anzahl an Pulsen des Frequenzgebersignals pro Bit ist und $\Delta\text{Pulse}_{\max}$ eine Konstante ist, welche kleiner als $\text{Pulse}_{\text{Bit}}/2$ oder $\text{Pulse}_{\text{Bit}}/4$ oder $\text{Pulse}_{\text{Bit}}/8$ ist.

Diese Bedingung beschreibt eine Beschränkung der Datenblockgröße auf eine maximale Anzahl von Bytes $\text{Byte}_{\text{MaxBlock}}$, die von der Frequenzdifferenz $\Delta f_{\text{PICC}\leftrightarrow\text{PCD}}$ und von der Konstante $\Delta\text{Pulse}_{\max}$ abhängt. Die Konstante $\Delta \text{Pulse}_{\max}$ gibt den maximal zulässigen Zeitunterschied zwischen dem erwarteten und dem tatsächlichen Sendezeitpunkt des letzten Bits des Datenblocks an, gemessen in Einheiten von Clockpulsen. Dieser Zeitunterschied muss generell kleiner sein als $\text{Pulse}_{\text{Bit}}/2$ (der Hälfte der Sendedauer eines Bits), da ein Zeitunterschied von exakt $\text{Pulse}_{\text{Bit}}/2$ (oder mehr) bedeuten würde, dass das letzte Bit des Datenblocks zur Hälfte (oder zu mehr als der Hälfte) außerhalb des Zeitraums gesendet wird, in dem dieses von dem Lesegerät erwartet wird. Spätestens ab diesem Grenzfall ist eine fehlerfreie Datenübertragung nicht mehr möglich.

Häufig wird ein Datenbit auch als eine Sequenz zweier zeitlich aufeinander folgender Zeitabschnitte codiert, in denen das Sendesignal unterschiedlich moduliert wird. Beispielsweise ist es möglich, den Wert 1 eines Datenbits dadurch darzustellen, dass während der ersten Hälfte des Zeitraums, in dem das Datenbit gesendet wird, das Signal mit einer Hilfsträgerfrequenz, die typischerweise ein Bruchteil der Frequenzgeberfrequenz ist, moduliert wird und in der zweiten Hälfte des Zeitraums, in dem das Datenbit gesendet wird, das Signal nicht moduliert wird. Der Wert 0 eines Datenbits wird dann dadurch dargestellt, dass während der ersten Hälfte des Zeitraums, in dem das Datenbit gesendet wird, das Signal nicht moduliert wird und in der zweiten Hälfte des Zeitraums, in dem das Datenbit gesendet wird, das Signal mit der Hilfsträgerfrequenz moduliert wird. Bei dieser Art der Datenübertragung ist zumindest eine Beschränkung auf $\Delta\text{Pulse}_{\max} < \text{Pulse}_{\text{Bit}}/4$ erforderlich. Denn bei $\Delta\text{Pulse}_{\max} = \text{Pulse}_{\text{Bit}}/4$ fällt eine Zeitspanne, in der das Signal moduliert oder nicht moduliert wird und die wiederum einer Hälfte des Zeitraums, in dem das Datenbit gesendet wird, entspricht, nur zur Hälfte in den Zeitraum, in dem das Datenbit vom Lesegerät erwartet wird.

Insbesondere hat es sich bei der zuvor dargestellten Datencodierung als besonders günstig herausgestellt, wenn der maximale Versatz der Clockpulse am Ende des Datenblocks auf die Periodendauer der zur Modulation verwendeten Hilfsträgerfrequenz beschränkt wird. Falls die Daten nach der gebräuchlichen Norm ISO/IEC 14443 übertragen werden, entspricht dies genau $\Delta Pulse_{max} \leq Pulse_{Bit}/8$.

Entsprechend dieser Transpondereinheit, die eine Einrichtung zum Beschränken der Datenblockgröße der Daten auf eine von der Frequenzdifferenz abhängige maximale Datenblockgröße umfasst, wird desweiteren ein Verfahren zum Übertragen von Daten von einer Transpondereinheit zu einem Lesegerät vorgeschlagen. Bei diesem wird die Frequenzdifferenz zwischen der Clockfrequenz des empfangenen Clocksignals und der generierten Frequenzgeberfrequenz bestimmt, und abhängig davon wird für die Übertragung von Daten zu dem Lesegerät die Datenblockgröße der zu übertragenden Daten auf maximale Datenblockgröße beschränkt.

In einer zweiten Variante, wie schon bei der ersten Variante, umfasst die Transpondereinheit zum Übertragen von Daten dem Lesegerät einen Empfänger zum Empfangen eines Clocksignals, das von dem Lesegerät mit einer Clockfrequenz ausgesendet wird, einen Frequenzgeber zum Generieren eines Frequenzgebersignals mit einer Frequenzgeberfrequenz, welches aus mit der Frequenzgeberfrequenz getakteten Pulsen besteht und zur Taktung der Übertragung der Daten verwendet wird, und einen Frequenzvergleicher, welcher eingerichtet ist, die Frequenzdifferenz zwischen der Clockfrequenz und der Frequenzgeberfrequenz zu bestimmen. Des Weiteren umfasst die Transpondereinheit jedoch bei dieser zweiten Variante eine Einrichtung zum Modifizieren des Frequenzgebersignals durch Erzeugen zusätzlicher Pulse oder Entfernen von Pulsen in Abhängigkeit von der Frequenzdifferenz.

Bei Verwendung des modifizierten Frequenzgebersignals zur Taktung der Datenübertragung kann durch das Hinzufügen bzw. das Entfernen von Pulsen die Übertragungsdauer eines Datenbits und damit die Bitrate der von der Transpondereinheit gesendeten Daten gezielt beeinflusst werden. Dementsprechend lässt sich durch das Hinzufügen bzw. das Entfernen von Pulsen in Abhängigkeit von der ermittelten Frequenzdifferenz die Bitrate der gesendeten Daten an die von dem Lesegerät erwartete Bitrate anpassen. Hiermit können wiederum Übertragungsfehler, die entstehen würden, wenn Datenbits zu einem anderen Zeitpunkt gesendet werden, als dies von dem Lesegerät erwartet wird, reduziert bzw. vermieden werden. Somit erfolgt auch bei dieser zweiten Variante wie schon bei der ersten Variante ein Eingriff auf der Ebene der Datenstruktur. Während bei der ersten Variante die Datenpaketgröße gezielt beschränkt wird, wird bei der zweiten Variante durch Einfügen/Entfernen von Pulsen die Länge der Datenpakete beeinflusst. Beide Varianten haben zum Ergebnis, dass das Lesegerät von der bestehenden Frequenzdifferenz nichts mitbekommt.

Die Einrichtung zum Modifizieren des Frequenzgebersignals gemäß der zweiten Variante ist vorzugsweise eingerichtet ist, bei negativen Frequenzdifferenzen, bei denen die Frequenzgeberfrequenz kleiner ist als die Clockfrequenz, zusätzliche Pulse zu erzeugen, und bei positiven Frequenzdifferenzen, bei denen die Frequenzgeberfrequenz größer ist als die Clockfrequenz, Pulse aus dem Frequenzgebersignal zu entfernen. Damit kann die Zahl der Pulse des modifizierten Frequenzgebersignals über einen vorgegebenen Zeitraum in Richtung der Anzahl der Pulse des Clocksignals korrigiert werden, womit die mittlere Bitrate der gesendeten Daten näher an der von dem Lesegerät erwarteten Bitrate liegt.

Noch bevorzugter ist die Einrichtung zum Modifizieren des Frequenzgebersignals so eingerichtet, dass sie über einen vorgegebenen Zeitraum die Gesamtzahl der Pulse des modifizierten Frequenzgebersignals genau auf die Anzahl der Pulse des Clocksignals bringt. Hierdurch wird bei Verwendung des modifizierten Frequenzgebersignals zur Taktung der Datenübertragung die über den vorgegebenen Zeitraum gemittelte Bitrate der gesendeten Daten genau an die von dem Lesegerät erwartete Bitrate angeglichen.

Entsprechend dieser Transpondereinheit, die eine Einrichtung zum Modifizieren des Frequenzgebersignals durch Erzeugen zusätzlicher Pulse oder Entfernen von Pulsen in Abhängigkeit von der Frequenzdifferenz umfasst, wird ein Verfahren zum Übertragen von Daten von einer Transpondereinheit zu einem Lesegerät vorgeschlagen. Bei diesem wird wiederum die Frequenzdifferenz zwischen der Clockfrequenz des empfangenen Clocksignals und der Frequenzgeberfrequenz des generierten Frequenzgebersignals bestimmt und in Anhängigkeit davon das Frequenzgebersignal durch Erzeugen zusätzlicher Pulse oder Entfernen von Pulsen modifiziert, wobei das Übertragen der Daten unter Verwendung des modifizierten Frequenzgebersignals erfolgt.

Zudem sendet die Transpondereinheit die Daten vorzugsweise aktiv zu dem Lesegerät in einer Weise, dass das vom Lesegerät empfangene Signal als eine Modulation eines von dem Lesegerät erzeugten elektromagnetischen Feldes (z. B. Lastmodulation oder Modulation eines Rückstrahlquerschnitts) auswertbar ist.

Die Erfindung wird nachfolgend anhand der beiliegenden Zeichnungen beispielhaft erläutert. Es zeigen:

Fig.1     schematisch einen Vergleich der Sendezeitpunkte der Bits eines von einer Transpondereinheit gesendeten Datenblocks mit den von einem Lesegerät erwarteten Sendezeitpunkten,

Fig. 2     schematisch ein Datensignal, aus dem Werte für $\Delta Pulse_{max}$ abgeleitet werden,

Fig. 3    schematisch eine Transpondereinheit mit einer Einrichtung zum Beschränken der Datenblockgröße der zu übertragenden Daten,

Fig. 4    schematisch ein Frequenzgebersignal, das im Vergleich zu einem Clocksignal durch Einfügen eines zusätzlichen Pulses modifiziert wurde, und

Fig. 5    schematisch eine erfindungsgemäße Transpondereinheit mit einer Einrichtung zum Modifizieren eines Frequenzgebersignals durch Erzeugen zusätzlicher Pulse oder Entfernen von Pulsen.

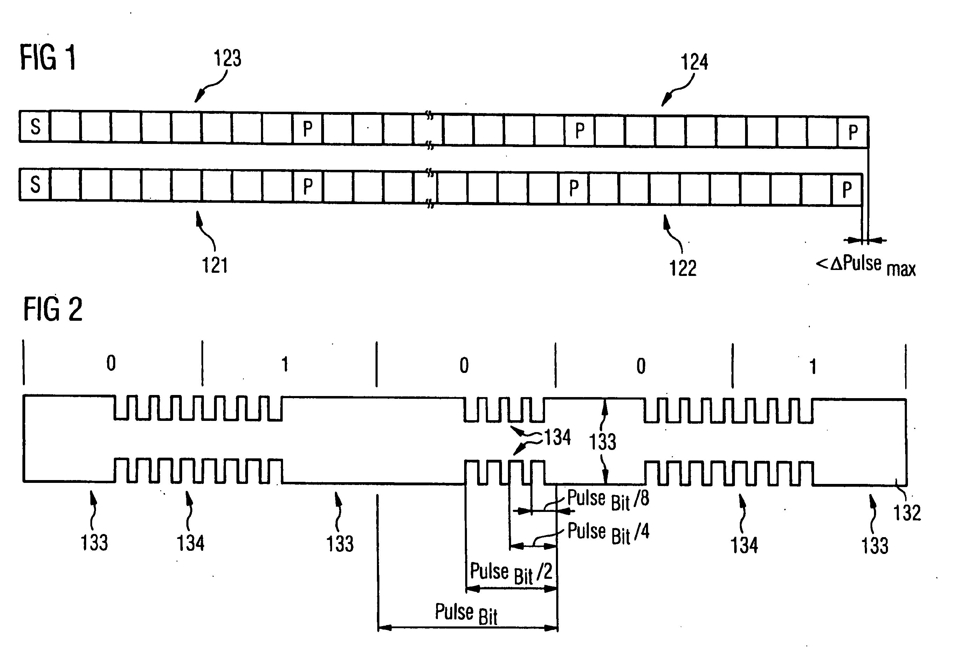

In Fig.1 werden schematisch die Sendezeitpunkte 121, 122 der Bits eines von einer Transpondereinheit gesendeten Datenblocks mit den von dem Lesegerät erwarteten Sendezeitpunkten 123, 124 der Bits des Datenblocks verglichen. Der Datenblock besteht aus einem Startbit S gefolgt von mehreren Datenbytes, die jeweils 8 Datenbits und ein Paritätsbit P umfassen. Im Anfangsbereich des Datenblocks stimmen die von dem Lesegerät erwarteten Sendezeitpunkte 123 der Bits gut mit den tatsächlichen Sendezeitpunkten 121 überein. Dies ist dadurch bedingt, dass das Lesegerät entweder eingerichtet sein muss, den Anfang eines Datenblocks zu erkennen oder selbst zu initiieren. Jedoch summiert sich der Fehler einer sich geringfügig unterscheidenden Bitdauer über den Datenblock hinweg auf. Daher ergibt sich nach einigen Datenbytes ein deutlicher Unterschied zwischen den erwarteten Sendezeitpunkten 124 der Bits und den tatsächlichen Sendezeitpunkten 122 der Bits.

Um diesen Zeitunterschied nicht zu groß werden zu lassen, wird gemäß einer ersten illustrativen Ausführungsvariante die Datenblockgröße beschränkt. Hierbei ist es generell erforderlich, die Datenblockgröße so zu beschränken, dass der maximal zulässige Zeitunterschied $\Delta Pulse_{max}$ zwischen dem erwarteten und dem tatsächlichen Sendezeitpunkt des letzten Bits des Datenblocks kleiner ist als die Hälfte $Pulse_{Bit}/2$ der Sendedauer $Pulse_{Bit}$ eines Bits, da sonst das letzte Bit des Datenblocks zur Hälfte oder zu mehr als der Hälfte außerhalb des Zeitraums gesendet wird, in dem dies von dem Lesegerät erwartet wird, und damit nicht mehr korrekt zugeordnet werden kann.

In Fig. 2 ist schematisch ein Datensignal 132 dargestellt, bei dem Datenbits als eine Sequenz zweier zeitlich aufeinander folgender Zeitabschnitte, in denen das Sendesignal unterschiedlich moduliert wird, codiert werden. Der Wert 1 eines Datenbits wird dargestellt durch ein in der ersten Hälfte des Sendezeitraums mit einer Hilfsträgerfrequenz moduliertes Signal 134 und in der zweiten Hälfte des Sendezeitraums unmoduliertes Signal 133. Der Wert 0 eines Datenbits wird dementsprechend dargestellt durch ein in der ersten Hälfte Sendezeitraums unmoduliertes Signal 133 und in der zweiten Hälfte des Sendezeitraums mit der Hilfsträgerfrequenz moduliertes Signal 134. Bei dieser Art der Datenübertragung ist zumindest eine Beschränkung auf $\Delta Pulse_{max} < Pulse_{Bit}/4$ erforderlich, da bei $\Delta Pulse_{max} = Pulse_{Bit}/4$ eine Zeitspanne, in der das Signal moduliert oder nicht moduliert wird und die wiederum einer Hälfte des Zeitraums, in dem das Datenbit gesendet wird, entspricht, nur zur Hälfte in den Zeitraum fällt, in dem das Datenbit vom Lesegerät erwartet wird.

Zudem hat es sich bei dieser Codierung des Datensignals als besonders günstig herausgestellt, wenn der maximale Versatz der Clockpulse am Ende des Datenblocks auf die Periodendauer der zur Modulation verwendeten Hilfsträgerfrequenz beschränkt wird. Falls die Daten nach der gebräuchlichen Norm ISO/IEC 14443 übertragen werden, entspricht dies genau $\Delta Pulse_{max} \leq Pulse_{Bit}/8$.

Aus der Eingangs angegebenen Gleichung ergibt sich bei eine Frequenzgeberfrequenz $f_c$ von 13.56 MHz, einer Bytelänge $Bit_{Byte}$ = 9 (8 Datenbits und einen Paritätsbit) und einem maximal zulässigen Zeitversatz $\Delta Pulse_{max} = Pulse_{Bit}/8$ eine maximale Datenblockgröße von $Byte_{MaxBlock} \leq 256$ Bytes, wenn die Frequenzdifferenz $\Delta f_{PICC \leftrightarrow PCD}$ zwischen der Clockfrequenz und der Frequenzgeberfrequenz 735 Hz nicht überschreitet' Dementsprechend ergibt sich eine maximale Datenblockgröße von $Byte_{MaxBlock} \leq 128$ Bytes für die doppelte Frequenzdifferenz von 1470 Hz und eine maximale Datenblockgröße von $Byte_{MaxBlock} \leq 64$ Bytes für die vierfache Frequenzdifferenz von 2940 Hz. Da beispielsweise Quarze eine Frequenztoleranz von $\pm$ 1 kHz aufweisen können, was bei Verwendung eines ersten Quarzes zur Erzeugung der Clockfrequenz und eines weiteren Quarzes zur Erzeugung der Frequenzgeberfrequenz eine Frequenzdifferenz $\Delta f_{PICC \leftrightarrow PCD}$ von bis zu 2 kHz ergeben kann, zeigen diese Zahlen, dass bei realistischen Transpondereinheiten durchaus Bedarf besteht, die maximale Datenblockgröße, welche nach ISO/IEC 14443 bis zu 256 Byte betragen kann, auf bis zu 64 Bytes zu beschränken. Eine generelle Begrenzung der Datenblockgröße auf 64 Bytes wäre zwar möglich, würde aber zu Geschwindigkeitseinbußen der Datenübertragung führen.

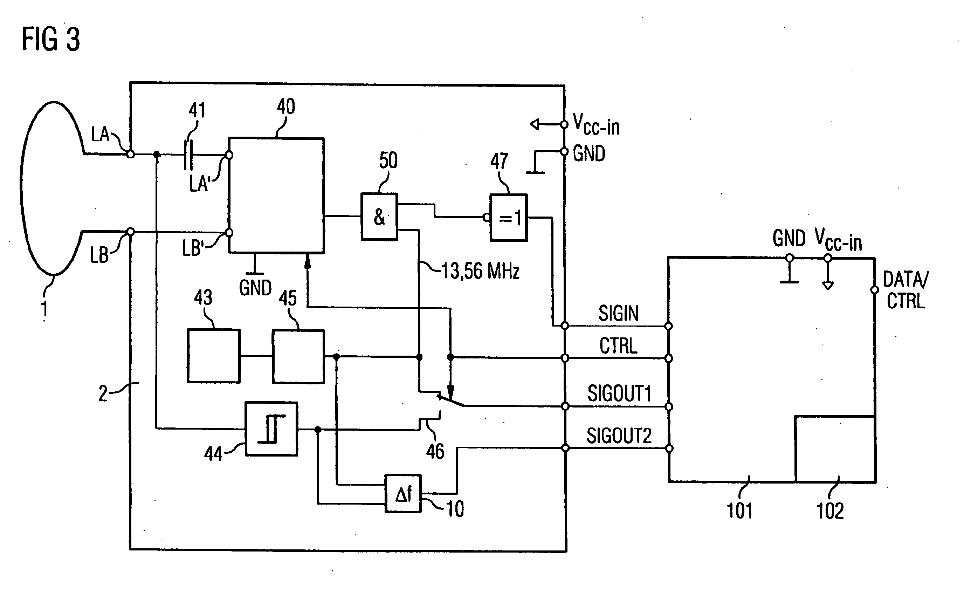

In Fig. 3 ist schematisch eine Transpondereinheit dargestellt, die einen Hochfrequenzbaustein 2 sowie einen Steuerungschip 101 umfasst.

Der Steuerungschip 101 ist an den Signaleingang SIGIN, die zwei Signalausgänge SIGOUT1 und SIGOUT2 sowie den Steuersignaleingang CTRL des Hochfrequenzbausteins angeschlossen. Zudem besitzt der Steuerungschip einen Eingang DATA/CTRL, über den er selbst angesteuert wird und über den ihm Daten von weiteren elektronischen Bauteilen zugeführt werden.

Im Sendebetrieb generiert der Steuerungschip 101 aus den zugeführten Daten ein Datensignal, welches über den Signaleingang SIGIN zu dem Hochfrequenzbaustein übertragen wird. Dieses Datensignal wird - in dieser konkreten Ausführungsform - mittels Signalinverters 47 invertiert, mittels des UND-Gatters 50 mit dem Frequenzgebersignal des Frequenzgebers 43, 45 moduliert, durch den Verstärker 40 verstärkt und über die Antenne 1 gesendet.

Der Frequenzgeber 43, 45, erzeugt das im Sendebetrieb benötigte Frequenzgebersignal. Der Oszillator 43 des Frequenzgebers wird mit einer mehrfachen Frequenz der Frequenzgeberfrequenz betrieben. Zudem ist der Frequenzgeber mit einem Teiler 45 ausgestattet, der aus dem Oszillatorsignal das benötigte Frequenzgebersignal erzeugen kann. Ein Vorteil dieser Anordnung besteht darin, dass, wenn im Empfangsbetrieb des Transponders das Frequenzgebersignal nicht benötigt wird, der Teiler außer Betrieb gesetzt werden kann, um Signalstörungen zu vermindern.

Die Antenne 1 ist über die Antennenanschlüsse LA und LB mit dem Hochfrequenzbaustein 2 verbunden und ist mit einer Serienkapazität 41 in Reihe geschaltet, um einen Reihenschwingkreis zu bilden. Dieser Reihenschwingkreis ist mit den Ausgängen LA' und LB' des Verstärkers 40 verbunden, so dass der im Resonanzfall fließende HF-Strom im Antennenschwingkreis nur durch den ohmschen Widerstand des Verstärkers 40 und der Leitungen begrenzt wird. Dadurch wird eine größtmögliche Sendeleistung des Hochfrequenzbaustein erreicht.

Bei der Erzeugung des Datensignals benötigt der Steuerungschip ein Signal mit der Frequenzgeberfrequenz zur Taktung. Dieses wird dem Steuerungschip über die Leitung SIGOUT1 zugeführt. Hierzu muss sich der durch die Steuerleitung CTRL angesteuerte Schalter 46 während des Sendebetriebs in der in der Abbildung dargestellten Position befinden.

Im Empfangsbetrieb wird der Schalter 46 auf die entgegengesetzte Position gesetzt. In diesem Fall wird dem Smart-Card-Chip über den Ausgang SIGOUT ein von der Antenne 1 abgegriffenes und mittels des Signalformers 44 digitalisiertes Empfangssignal zugeführt. Über die Steuerleitung CTRL kann zudem der Verstärker 40 im Empfangsbetrieb in einen Stromsparmodus geschaltet werden, um Energie zu sparen.

Die Anschlüsse GND dienen der Erdung und die Anschlüsse $V_{cc-in}$ der Energieversorgung.

Darüberhinaus besitzt das Hochfrequenzbauteil 2 bei der in Fig. 3 dargestellten Ausführungsvariante einen Frequenzvergleicher 10, der die Clockfrequenz eines mittels der Antenne 1 und dem Signalformer 44 bereitgestellten Clocksignals mit der Frequenzgeberfrequenz des Frequenzgebers 43, 45 vergleicht. Das Ausgangssignal des Frequenzvergleichers 10 wird über den Signalausgang SIGOUT2 dem Steuerungschip 101 zugeführt. Der Steuerungschip umfasst eine Einrichtung 102 zum Beschränken der Datenblockgröße auf eine von der Frequenzdifferenz abhängige maximale Datenblockgröße. Mittels einer Beschränkung der Datenblockgröße basierend auf der Frequenzdifferenz können Fehler der Datenübertragung vermieden oder begrenzt werden, wobei zugleich eine möglichst hohe Datenübertragungsrate erzielt werden kann.

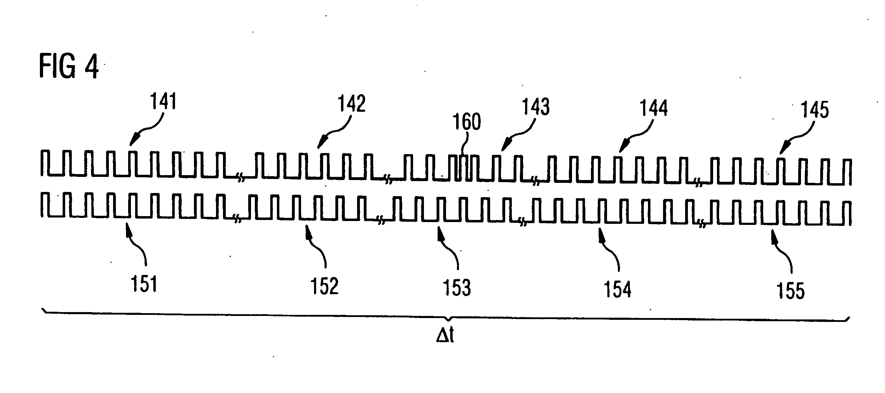

In Fig. 4 ist schematisch ein Frequenzgebersignal 141,142,143,144,145, das durch Einfügen eines zusätzlichen Pulses 160 modifiziert wurde, im Vergleich zu einem Clocksignal 151,152,153,154,155 dargestellt. Die Form der Pulse dieser Signale ist nicht auf die in dieser Abbildung beispielhaft dargestellte Form beschränkt. Bei dem dargestellten Vergleich ist das Frequenzgebersignal 141 zu Beginn eines vorgegebenen Zeitintervalls Δt mit dem Clocksignal 151 in Phase. In diesem Beispiel ist die Frequenzgeberfrequenz etwas niedriger als die Clockfrequenz. Da sich der hieraus ergebende Unterschied in der Periodendauer der Signale mit der Zeit aufsummiert, gerät das Frequenzgebersignal 142,143,144 und das Clocksignal 152,153,154 nach einigen Signalperioden immer deutlicher aus dem Takt, so dass die Signale 145, 155 schließlich eine ganze Periode zueinander versetzt sind. In dem dargestellten Beispiel wurde das Zeitintervall Δt genau so gewählt, dass in diesem das Clocksignal genau P Pulse und das unmodifizierte Frequenzgebersignal genau P-1 Pulse besitzt. Um die Zahl der Pulse des Frequenzgebersignals über den vorgegebenen Zeitraum Δt auf die Gesamtzahl der Pulse des Clocksignals zu bringen, wurde daher genau ein zusätzlicher Puls 160 in das Frequenzgebersignal eingefügt. Falls im Gegensatz dazu beispielsweise das Clocksignal in dem Zeitintervall Δt genau P Pulse besäße und das unmodifizierte Frequenzgebersignal genau P+1 Pulse, würde stattdessen ein Puls des Frequenzgebersignals entfernt werden müssen, um die Zahl der Pulse des Frequenzgebersignals über den vorgegebenen Zeitraum Δt auf die Gesamtzahl der Pulse des Clocksignals zu bringen. Bei Verwendung des derart modifizierten Frequenzgebersignals zur Taktung der Datenübertragung wird die über den vorgegebenen Zeitraum Δt gemittelte Bitrate der von der Transpondereinheit gesendeten Daten genau an die von dem Lesegerät erwartete Bitrate, welche auf dem Clocksignal basiert, angeglichen. Hierdurch können Fehler bei der Datenübertragung, die dadurch entstehen, dass Datenbits zu einem anderen Zeitpunkt gesendet werden als dies von dem Lesegerät erwartet wird, vermieden werden.

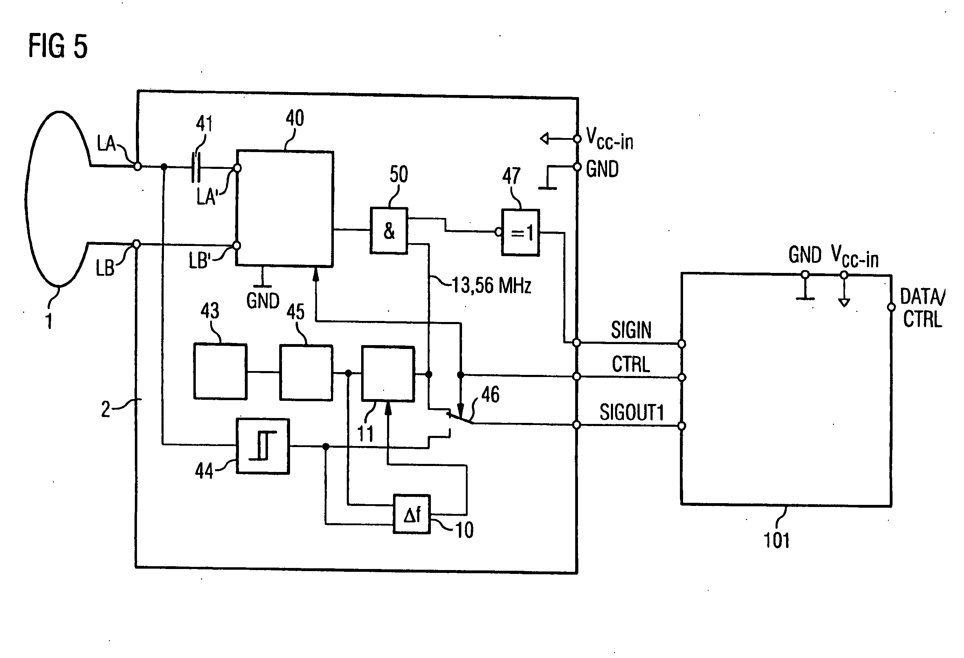

Der Aufbau der in Fig. 5 schematisch dargestellten Transpondereinheit zur Realisierung der zweiten Ausführungsvariante folgt im Wesentlichen dem Aufbau der in Fig. 3 dargestellten Transpondereinheit, welche die erste Ausführungsvariante realisiert. Jedoch verfügt bei der in Fig. 5 dargestellten Transpondereinheit der Steuerungschip 101 nicht über eine Einrichtung zum Beschränken der Datenblockgröße auf eine von der Frequenzdifferenz abhängige maximale Datenblockgröße und das Ausgangssignal des Frequenzvergleichers 10 wird nicht dem Steuerungschip 101 zugeführt. Stattdessen wird das Ausgangssignal des Frequenzvergleichers einer Einrichtung 11 zugeführt, und das Frequenzgebersignal durch Erzeugen zusätzlicher Pulse oder Entfernen von Pulsen in Abhängigkeit von der Frequenzdifferenz, zu modifizieren. Da das modifizierte Frequenzgebersignal während des Sendebetriebs über den Ausgang SIGOUT1 dem Steuerungschip 101 zur Taktung der Datenübertragung zugeführt wird, kann durch das Hinzufügen bzw. das Entfernen von Pulsen die Übertragungsdauer eines Datenbits und damit die Bitrate der von der Transpondereinheit gesendeten Daten beeinflusst werden. Dementsprechend lässt sich durch das Hinzufügen bzw. das Entfernen von Pulsen in Abhängigkeit von der Frequenzdifferenz die Bitrate der gesendeten Daten an die von dem Lesegerät erwartete Bitrate anpassen. So lassen sich Fehler bei der Datenübertragung vermeiden, die entstehen würden, wenn Datenbits zu einem anderen Zeitpunkt gesendet werden, als dies vom Lesegerät erwartet wird.

## Patentansprüche

1. Transpondereinheit (1, 2, 101) zum Übertragen von Daten zu einem Lesegerät mittels eines elektromagnetischen Feldes, umfassend

    - einen Empfänger (1, 44) zum Empfangen eines von dem Lesegerät ausgesendeten Clocksignals (151,152,153, 154,155) mit einer Clockfrequenz,
    - einen Frequenzgeber (43, 45) zum Generieren eines Frequenzgebersignals (141,142,143, 144,145) mit einer Frequenzgeberfrequenz, welches aus mit der Frequenzgeberfrequenz getakteten Pulsen besteht und zur Taktung der Übertragung der Daten verwendet wird, und
    - einen Frequenzvergleicher (10), welcher eingerichtet ist, die Frequenzdifferenz zwischen der Clockfrequenz und der Frequenzgeberfrequenz zu bestimmen,

    **gekennzeichnet dadurch, dass** eine Einrichtung (11) zum Modifizieren des Frequenzgebersignals (141, 142, 143, 144, 145) durch Erzeugen zusätzlicher Pulse (160) oder Entfernen von Pulsen in Abhängigkeit von der Frequenzdifferenz über einen vorgegebenen Zeitraum die Zahl der Pulse des modifizierten Frequenzgebersignals (141, 142, 143, 144, 145) auf die Gesamtzahl der Pulse des Clocksignals (151,152,153,154,155) bringt, und dass dier Einrichtung nicht mit dem Frequenzgeber rückgekoppelt ist.

2. Transpondereinheit (1, 2, 101) nach Anspruch 1, **dadurch gekennzeichnet, dass** die Einrichtung (11) zum Modifizieren des Frequenzgebersignals (141,142,143,144,145) eingerichtet ist, bei Frequenzdifferenzen, bei denen die Frequenzgeberfrequenz kleiner ist als die Clockfrequenz, zusätzliche Pulse (160) im Frequenzgebersignal (141, 142, 143, 144, 145) zu erzeugen.

3. Transpondereinheit (1, 2,101) nach einem der Ansprüche 1 oder 2,
**dadurch gekennzeichnet, dass** die Einrichtung (11) zum Modifizieren des Frequenzgebersignals (141,142,143, 144,145) eingerichtet ist, bei Frequenzdifferenzen, bei denen die Frequenzgeberfrequenz größer ist als die Clockfrequenz, Pulse aus dem Frequenzgebersignal (141, 142, 143,144,145) zu entfernen.

4. Transpondereinheit (1, 2, 101) nach einem der Ansprüche 1 bis 3,
**dadurch gekennzeichnet, dass** die Transpondereinheit (1, 2, 101) eingerichtet ist, aktiv Daten derart zu senden, dass das hierdurch erzeugte Signal (132) als eine Modulation eines von dem Lesegerät erzeugten elektromagnetischen Feldes auswertbar ist.

5. System zur Datenübertragung, **gekennzeichnet durch** mindestens eine Transpondereinheit (1, 2, 101) nach einem der Ansprüche 1 bis 4 und ein Lesegerät, welches zur Kommunikation mit der Transpondereinheit eingerichtet ist.

6. Verfahren zum Übertragen von Daten von einer Transpondereinheit (1, 2, 101) zu einem Lesegerät mittels eines elektromagnetischen Feldes, umfassend die folgenden Schritte:

    - Empfangen eines von dem Lesegerät ausgesendeten Clocksignals (151, 152,153,154,155) mit einer Clockfrequenz,
    - Generieren eines Frequenzgebersignals (141, 142, 143, 144, 145) mit einer Frequenzgeberfrequenz, welches aus mit der Frequenzgeberfrequenz getakteten Pulsen besteht,
    - Bestimmen der Frequenzdifferenz zwischen der Clockfrequenz und der Frequenzgeberfrequenz, und
    - Übertragen von Daten zu dem Lesegerät mittels eines elektromagnetischen Feldes,

    **gekennzeichnet durch** den weiteren Schritt des Modifizierens des Frequenzgebersignals (141,142,143,144,145) **durch** Bringen der Zahl der Pulse des modifizierten Frequenzgebersignals über einen vorgegebenen Zeitraum auf die Gesamtzahl der Pulse des Clocksignals, **durch** Erzeugen zusätzlicher Pulse (160) oder Entfernen von Pulsen in Abhängigkeit von der Frequenzdifferenz, wobei das Übertragen der Daten zu dem Lesegerät mittels des elektromagnetischen Feldes unter Verwendung des modifizierten Frequenzgebersignals erfolgt und die Generierung des Frequenzgebersignals nicht rückgeKoppelt mit dem Schritt des Modifizierens erfolgt.

7. Verfahren nach Anspruch 6, **dadurch gekennzeichnet, dass** bei dem Schritt des Modifizierens des Frequenzgebersignals (141, 142, 143, 144, 145) bei Frequenzdifferenzen, bei denen die Frequenzgeberfrequenz kleiner ist als die Clockfrequenz, zusätzliche Pulse (160) im Frequenzgebersignal (141, 142, 143, 144, 145) erzeugt werden.

8. Verfahren nach einem der Ansprüche 6 oder 7, **dadurch gekennzeichnet, dass** bei dem Schritt des Modifizierens des Frequenzgebersignals (141,142,143,144,145) bei Frequenzdifferenzen, bei denen die Frequenzgeberfrequenz größer ist als die Clockfrequenz, Pulse aus dem Frequenzgebersignal (141,142,143,144,145) entfernt werden.

9. Verfahren nach einem der Ansprüche 6 bis 8, **dadurch gekennzeichnet, dass** bei dem Schritt des Übertragens der Daten zu dem Lesegerät die Transpondereinheit (1, 2, 101) aktiv Daten derart sendet, dass das hierdurch erzeugte Signal (132) als eine Modulation eines von dem Lesegerät erzeugten elektromagnetischen Feldes auswertbar ist.

## Claims

1. A transponder unit (1, 2, 101) for transferring data to a reading device by means of an electromagnetic field, comprising

   - a receiver (1, 44) for receiving a clock signal (151, 152, 153, 154, 155) emitted by the reading device, at a clock frequency,
   - a frequency generator (43, 45) for generating a frequency generator signal (141, 142, 143, 144, 145) at a frequency generator frequency, which consists of pulses clocked at the frequency generator frequency and is employed for clocking the transfer of the data, and
   - a frequency comparator (10) which is adapted to determine the frequency difference between the clock frequency and the frequency generator frequency, **characterized in that** a device (11) for modifying the frequency generator signal (141, 142, 143, 144, 145) by generating additional pulses (160) or removing pulses in dependence on the frequency difference brings the number of pulses of the modified frequency generator signal (141, 142, 143, 144, 145) to the total number of pulses of the clock signal (151, 152, 153, 154, 155) over a specified time period, and that the device is not coupled in a feedback arrangement with the frequency generator.

2. The transponder unit (1, 2, 101) according to claim 1, **characterized in that** the device (11) for modifying the frequency generator signal (141, 142, 143, 144, 145) is adapted to generate additional pulses (160) in the frequency generator signal (141, 142, 143, 144, 145) in the case of frequency differences in which the frequency generator frequency is smaller than the clock frequency.

3. The transponder unit (1, 2, 101) according to either of claims 1 to 2, **characterized in that** the device (11) for modifying the frequency generator signal (141, 142, 143, 144, 145) is adapted to remove pulses from the frequency generator signal (141, 142, 143, 144, 145) in the case of frequency differences in which the frequency generator frequency is greater than the clock frequency.

4. The transponder unit (1, 2, 101) according to any of claims 1 to 3, **characterized in that** the transponder unit (1, 2, 101) is adapted to actively transmit data such that the signal (132) generated thereby is evaluable as a modulation of an electromagnetic field generated by the reading device.

5. A system for data transfer, **characterized by** at least one transponder unit (1, 2, 101) according to any of claims 1 to 4, and a reading device which is adapted for communication with the transponder unit.

6. A method for transferring data from a transponder unit (1, 2, 101) to a reading device by means of an electromagnetic field, comprising the following steps:

   - receiving a clock signal (151, 152, 153, 154, 155) emitted by the reading device, at a clock frequency,
   - generating a frequency generator signal (141, 142, 143, 144, 145) at a frequency generator frequency, which consists of pulses clocked at the frequency generator frequency,
   - determining the frequency difference between the clock frequency and the frequency generator frequency, and
   - transferring data to the reading device by means of an electromagnetic field, **characterized by** the further step of modifying the frequency generator signal (141, 142, 143, 144, 145) by bringing the number of pulses of the modified frequency generator signal over a specified time period to the total number of pulses of the clock signal, by generating additional pulses (160) or removing pulses in dependence on the frequency difference, wherein the transfer of the data to the reading device by means of the electromagnetic field is effected while employing the modified frequency generator signal, and the generation of the frequency generator signal is effected without feedback coupling with the modifying step.

7. The method according to claim 6, **characterized in that** in the step of modifying the frequency generator signal (141, 142, 143, 144, 145), additional pulses (160) are generated in the frequency generator signal (141, 142, 143, 144, 145) in the case of frequency differences in which the frequency generator frequency is smaller than the clock frequency.

8. The method according to either of claims 6 to 7, **characterized in that** in the step of modifying the frequency generator signal (141, 142, 143, 144, 145), pulses are removed from the frequency generator signal (141, 142, 143, 144, 145) in the case of frequency differences in which the frequency generator frequency is greater than the clock frequency.

9. The method according to any of claims 6 to 8, **characterized in that** in the step of transferring the data to the reading device, the transponder unit (1, 2, 101) actively transmits data such that the signal (132) generated thereby is evaluable as a modulation of an electromagnetic field generated by the reading device.

## Revendications

1. Unité transpondeur (1, 2, 101) destinée à la transmission de données à un appareil de lecture au moyen d'un champ électromagnétique, comprenant

   - un récepteur (1, 44) pour la réception d'un signal d'horloge (151, 152, 153, 154, 155) envoyé par l'appareil de lecture avec une fréquence d'horloge,
   - un générateur de fréquence (43, 45) destiné à la génération d'un signal de générateur de fréquence (141, 142, 143, 144, 145) avec une fréquence de générateur de fréquence, lequel signal consiste en des impulsions cadencées avec la fréquence de générateur de fréquence et est utilisé pour le cadencement de la transmission de données, et
   - un comparateur de fréquence (10) qui est configuré pour déterminer la différence de fréquence entre la fréquence d'horloge et la fréquence de générateur de fréquence, **caractérisée en ce qu'**un dispositif (11) de modification du signal de générateur de fréquence (141, 142, 143, 144, 145) amène, par génération d'impulsions (160) supplémentaires ou par suppression d'impulsions en fonction de la différence de fréquence pendant une durée prédéterminée, le nombre d'impulsions du signal modifié de générateur de fréquence (141, 142, 143, 144, 145) au nombre total d'impulsions du signal d'horloge (151, 152, 153, 154, 155), et **en ce que** le dispositif n'est pas rétrocouplé au générateur de fréquence.

2. Unité transpondeur (1, 2, 101) selon la revendication 1, **caractérisée en ce que** le dispositif (11) de modification du signal de générateur de fréquence (141, 142, 143, 144, 145) est configuré pour, dans les cas de différences de fréquence lors desquelles la fréquence du générateur de fréquence est inférieure à la fréquence d'horloge, générer des impulsions (160) supplémentaires dans le signal de générateur de fréquence (141, 142, 143, 144, 145).

3. Unité transpondeur (1, 2, 101) selon une des revendications 1 ou 2, **caractérisée en ce que** le dispositif (11) de modification du signal de générateur de fréquence (141, 142, 143, 144, 145) est configuré pour, dans les cas de différences de fréquence lors desquelles la fréquence du générateur de fréquence est supérieure à la fréquence d'horloge, supprimer des impulsions du signal de générateur de fréquence (141, 142, 143, 144, 145).

4. Unité transpondeur (1, 2, 101) selon une des revendications de 1 à 3, **caractérisée en ce que** l'unité transpondeur (1, 2, 101) est configurée pour envoyer de telle sorte activement des données que le signal (132) ainsi généré est exploitable en tant qu'une modulation d'un champ électromagnétique généré par l'appareil de lecture.

5. Système de transmission de données, **caractérisé par** au moins une unité transpondeur (1, 2, 101) selon une des revendications de 1 à 4 et un appareil de lecture configuré pour la communication avec l'unité transpondeur (1, 2, 101).

6. Procédé de transmission de données d'une unité transpondeur (1, 2, 101) à un appareil de lecture au moyen d'un champ électromagnétique, comprenant les étapes suivantes :

- réception d'un signal d'horloge (151, 152, 153, 154, 155) envoyé par l'appareil de lecture avec une fréquence d'horloge,
- génération d'un signal de générateur de fréquence (141, 142, 143, 144, 145) avec une fréquence de générateur de fréquence qui consiste en des impulsions cadencées avec la fréquence de générateur de fréquence,
- détermination de la différence de fréquence entre la fréquence d'horloge et la fréquence du générateur de fréquence, et
- transmission de données à l'appareil de lecture au moyen d'un champ électromagnétique,

**caractérisé par** l'étape supplémentaire de la modification du signal de générateur de fréquence (141, 142, 143, 144, 145) par une action amenant, pendant une durée prédéterminée, le nombre d'impulsions du signal modifié de générateur de fréquence au nombre total d'impulsions du signal d'horloge, par génération d'impulsions (160) supplémentaires ou par suppression d'impulsions en fonction de la différence de fréquence, la transmission des données à l'appareil de lecture ayant lieu au moyen du champ électromagnétique en se servant du signal modifié de générateur de fréquence et la génération du signal de générateur de fréquence n'ayant pas lieu de manière rétrocouplée avec l'étape de la modification.

7. Procédé selon la revendication 6, **caractérisé en ce que**, lors de l'étape de la modification du signal de générateur de fréquence (141, 142, 143, 144, 145) en cas de différences de fréquence lors desquelles la fréquence du générateur de fréquence est inférieure à la fréquence d'horloge, des impulsions (160) supplémentaires dans le signal de générateur de fréquence (141, 142, 143, 144, 145) sont générées.

8. Procédé selon une des revendications 6 ou 7, **caractérisé en ce que**, lors de l'étape de la modification du signal de générateur de fréquence (141, 142, 143, 144, 145) en cas de différences de fréquence lors desquelles la fréquence du générateur de fréquence est supérieure à la fréquence d'horloge, des impulsions du signal de générateur de fréquence (141, 142, 143, 144, 145) sont supprimées.

9. Procédé selon une des revendications de 6 à 8, **caractérisé en ce que**, lors de l'étape de la transmission de données à l'appareil de lecture, l'unité transpondeur (1, 2, 101) envoie de telle sorte activement des données que le signal (132) ainsi généré est exploitable en tant qu'une modulation d'un champ électromagnétique généré par l'appareil de lecture.

FIG 1

FIG 2

EP 2 474 940 B1

FIG 3

FIG 4

EP 2 474 940 B1

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004031092 A1
- DE 102005061660 A1